# EUROPEAN PATENT APPLICATION

(11) **EP 4 617 871 A1**
(43) Date of publication of application: **17.09.2025**
(21) Application number: 23902471.4
(22) Date of filing: 25.11.2023
(51) Int. Cl.: G06F 9/48, G06F 9/50

(54) **TASK CONCURRENCY METHOD FOR INTERPRETED SCRIPTING LANGUAGE, AND RELATED PRODUCT**

(30) Priority: 13.12.2022 CN 202211592860
(71) Applicant: Huawei Technologies Co., Ltd., Shenzhen, Guangdong 518129 (CN)
(72) Inventor: WENG, Changcheng, Shenzhen, Guangdong 518129 (CN); LI, Yongbiao, Shenzhen, Guangdong 518129 (CN); HUANG, Feijie, Shenzhen, Guangdong 518129 (CN); WANG, Zhaoyong, Shenzhen, Guangdong 518129 (CN)
(74) Representative: Pfenning, Meinig & Partner mbB
(86) International application number: PCT/CN2023/134182
(87) International publication number: WO 2024/125273

(57) **Abstract**

This application discloses a method for task concurrency in an interpreted scripting language and a related product. In this application, a child thread task obtained by dividing a main thread task is obtained, and the child thread task is distributed to a task queue, where the child thread task includes the following information: a bytecode address corresponding to an execution method of the child thread task, or source code corresponding to the execution method of the child thread task. Then, the child thread task is obtained from the task queue and is distributed to a child thread in a child thread pool, based on a hardware resource status of the electronic device and/or status information of the child thread, so that the child thread executes the child thread task, to obtain an execution result of the child thread task. In addition, the execution result that is of the child thread task and that is returned by the child thread is obtained, and the execution result of the child thread task is returned to a main thread. According to the solutions of this application, task concurrency in the interpreted scripting language can be implemented, and thread resource utilization can be improved.

## Description

This application claims priority to Chinese Patent Application No. 202211592860.X, filed with the China National Intellectual Property Administration on December 13, 2022 and entitled "METHOD FOR TASK CONCURRENCY IN INTERPRETED SCRIPTING LANGUAGE AND RELATED PRODUCT", which is incorporated herein by reference in its entirety.

### TECHNICAL FIELD

This application relates to the field of computer technologies, and in particular, to a method and apparatus for task concurrency in an interpreted scripting language (for example, JavaScript, JS), an electronic device, a chip, a chip module, and a storage medium.

### BACKGROUND

In a multi-thread (multi-thread) execution mechanism implemented in an operating system, development and maintenance costs of a complex application can be reduced by appropriately using a plurality of threads, and application performance can be further improved.

A distributed parallel computing model (Actor) transfers data based on an event/message mechanism. This model can be used to effectively avoid resource contention, deadlock, and the like between threads.

Web-Worker is a JS multi-thread solution implemented based on an actor model to create a multi-thread environment for JS. In the Web-Worker, a main thread (main thread) may create child threads (Workers) and allocate some tasks to the workers for running. The workers are isolated from each other. After completing computing tasks, the workers return results to the main thread by transferring objects through serialization.

However, the Web-Worker solution cannot be used to perform global unified management on a plurality of threads. Different modules in the main thread use workers. Workers of different modules may have repeated functions and unsaturated loads. If a plurality of modules all use workers, worker flooding occurs. In addition, a worker user needs to manage a life cycle of a worker. Consequently, thread resource utilization is low. In addition, the worker does not support function transfer, and a to-be-executed function needs to be written in a worker.js file.

In view of this, how to implement task concurrency in JS and improve thread resource utilization is an urgent problem to be resolved.

### SUMMARY

This application provides a method and apparatus for task concurrency in an interpreted scripting language, an electronic device, a chip, a chip module, and a storage medium, to implement task concurrency in JS and improve thread resource utilization.

According to a first aspect, a method for task concurrency in an interpreted scripting language is provided, where the method is applied to an electronic device. The method includes: obtaining at least one child thread task obtained by dividing a main thread task, and sequentially distributing the at least one child thread task to a task queue, where the at least one child thread task includes the following information: a bytecode address corresponding to an execution method of the at least one child thread task, or source code corresponding to the execution method of the at least one child thread task; sequentially obtaining the at least one child thread task from the task queue and respectively distributing the at least one child thread task to at least one child thread in a child thread pool, based on a hardware resource status of the electronic device and/or status information of the at least one child thread, so that the at least one child thread respectively executes the at least one child thread task, to obtain an execution result of the at least one child thread task; and obtaining the execution result that is of the at least one child thread task and that is returned by the at least one child thread, and returning the execution result of the at least one child thread task to a main thread.

In this aspect, the child thread task obtained by dividing the main thread task is obtained, and the child thread task is distributed to the task queue. Then, the child thread task is obtained and is distributed to the child thread in the child thread pool based on the hardware resource status of the electronic device and/or the status information of the child thread, so that the child thread executes the child thread task, to obtain the execution result of the child thread task. In addition, the execution result that is of the child thread task and that is returned by the child thread is obtained, and the execution result of the child thread task is returned to the main thread. Task concurrency in the interpreted scripting language can be implemented, and thread resource utilization can be improved.

In a possible implementation, sequentially distributing the at least one child thread task to the task queue includes: sequentially distributing the at least one child thread task to the task queue based on a feature of the at least one child thread task.

In this implementation, different child thread tasks may have different features and different importance. Therefore, when at least one child thread task is enqueued, enqueuing a task based on a feature of the task can be used to ensure that a task of higher importance is first enqueued, and the task of higher importance is first dequeued based on a "first in first out" principle of a queue, so that it can be ensured that the task of higher importance is executed first.

In another possible implementation, the feature of the at least one child thread task includes a priority of the at least one child thread task, and sequentially distributing the at least one child thread task to the task queue based on the feature of the at least one child thread task includes: sequentially distributing, based on the priority of the at least one child thread task, the at least one child thread task to a task queue corresponding to the priority, where the task queue corresponding to the priority includes at least one of the following task queues: a high-priority queue, a medium-priority queue, and a low-priority queue.

In this implementation, different child thread tasks may have different priorities. Tasks with different priorities are added to different queues, and child thread tasks are sequentially obtained and distributed based on priorities of the queues, so that a task with a higher priority can be executed first.

In still another possible implementation, the status information of the at least one child thread includes at least one of the following information: a load size of the at least one child thread and a quantity of child threads in the child thread pool. Sequentially obtaining the at least one child thread task from the task queue and respectively distributing the at least one child thread task to the at least one child thread in the child thread pool, based on the hardware resource status of the electronic device and/or the status information of the at least one child thread includes: when the hardware resource status of the electronic device supports the at least one child thread in the thread pool, sequentially obtaining the at least one child thread task from the task queue, and respectively distributing the at least one child thread task to at least a part of the at least one child thread; and/or when the hardware resource status of the electronic device supports a part of child threads in the thread pool, sequentially obtaining the at least one child thread task from the task queue, and respectively distributing the at least one child thread task to the part of child threads in the thread pool; and/or sequentially obtaining the at least one child thread task from the task queue, and respectively distributing the at least one child thread task to the at least one child thread whose load is less than or equal to a first threshold; and/or if a quantity of child threads whose load is less than or equal to the first threshold is less than a quantity of the at least one child thread task, creating at least one child thread, and respectively distributing the at least one child thread task to the at least one existing child thread in the thread pool and the at least one created child thread.

In this implementation, the child thread in the child thread pool is managed in a unified manner, to improve thread resource utilization.

In still another possible implementation, after obtaining the execution result that is of the at least one child thread task and that is returned by the at least one child thread, the method further includes: if a quantity of child thread tasks in the task queue is less than or equal to a second threshold, and the quantity of child threads whose load is less than or equal to the first threshold is greater than or equal to a third threshold, reclaiming at least one child thread, where a quantity of the at least one reclaimed child thread is less than or equal to a difference between the third threshold and the second threshold.

In this implementation, if a quantity of child threads in a task pool is greater than the quantity of child thread tasks in the task queue by a specific quantity, a part of child threads may be reclaimed, to avoid occupying system resources.

In still another possible implementation, the at least one child thread task further includes at least one of the following information: a parameter of the at least one child thread task and a constant value of the execution method. Before sequentially distributing the at least one child thread task to the task queue, the method further includes: serializing the at least one child thread task, so that the at least one child thread deserializes the at least one serialized child thread task, and obtains the execution method of the at least one child thread task from a bytecode sharing interval based on the bytecode address corresponding to the execution method, or obtains the source code corresponding to the execution method of the at least one child thread task.

In this implementation, related information of the child thread task is transferred between the main thread and the child thread through serialization.

According to a second aspect, an apparatus for task concurrency in an interpreted scripting language is provided, and can implement the method in the first aspect. The method may be implemented by software, hardware, or hardware executing corresponding software.

In a possible implementation, the apparatus includes: a first obtaining unit, configured to obtain at least one child thread task obtained by dividing a main thread task, where the at least one child thread task includes the following information: a bytecode address corresponding to an execution apparatus of the at least one child thread task, or source code corresponding to the execution apparatus of the at least one child thread task; a first distribution unit, configured to sequentially distribute the at least one child thread task to a task queue; a second distribution unit, configured to sequentially obtain the at least one child thread task from the task queue and respectively distribute the at least one child thread task to at least one child thread in a child thread pool, based on a hardware resource status of the apparatus and/or status information of the at least one child thread, so that the at least one child thread respectively executes the at least one child thread task, to obtain an execution result of the at least one child thread task; a second obtaining unit, configured to obtain the execution result that is of the at least one child thread task and that is returned by the at least one child thread; and a returning unit, configured to return the execution result of the at least one child thread task to a main thread.

Optionally, the first distribution unit is configured to sequentially distribute the at least one child thread task to the task queue based on a feature of the at least one child thread task.

Optionally, the feature of the at least one child thread task includes a priority of the at least one child thread task, and the first distribution unit is configured to sequentially distribute, based on the priority of the at least one child thread task, the at least one child thread task to a task queue corresponding to the priority, where the task queue corresponding to the priority includes at least one of the following task queues: a high-priority queue, a medium-priority queue, and a low-priority queue.

Optionally, the status information of the at least one child thread includes at least one of the following information: a load size of the at least one child thread and a quantity of child threads in the child thread pool. The second distribution unit is configured to: when the hardware resource status of the apparatus supports the at least one child thread in the thread pool, sequentially obtain the at least one child thread task from the task queue, and respectively distribute the at least one child thread task to at least a part of the at least one child thread; and/or the second distribution unit is configured to: when the hardware resource status of the apparatus supports a part of child threads in the thread pool, sequentially obtain the at least one child thread task from the task queue, and respectively distribute the at least one child thread task to the part of child threads in the thread pool; and/or the second distribution unit is configured to: sequentially obtain the at least one child thread task from the task queue, and respectively distribute the at least one child thread task to the at least one child thread whose load is less than or equal to a first threshold; and/or the second distribution unit includes a creation unit, configured to: if a quantity of child threads whose load is less than or equal to the first threshold is less than a quantity of the at least one child thread task, create at least one child thread; and a third distribution unit, configured to respectively distribute the at least one child thread task to the at least one existing child thread in the thread pool and the at least one created child thread.

Optionally, the apparatus further includes a reclaiming unit, configured to: if a quantity of child thread tasks in the task queue is less than or equal to a second threshold, and the quantity of child threads whose load is less than or equal to the first threshold is greater than or equal to a third threshold, reclaim at least one child thread, where a quantity of the at least one reclaimed child thread is less than or equal to a difference between the third threshold and the second threshold.

Optionally, the at least one child thread task further includes at least one of the following information: a parameter of the at least one child thread task and a constant value of the execution apparatus. The apparatus further includes a serialization unit, configured to: serialize the at least one child thread task, so that the at least one child thread deserializes the at least one serialized child thread task, and obtains the execution apparatus of the at least one child thread task from a bytecode sharing interval based on the bytecode address corresponding to the execution apparatus, or obtains the source code corresponding to the execution apparatus of the at least one child thread task.

In another possible implementation, the apparatus includes a processor coupled to a memory. The processor is configured to support the apparatus in performing a corresponding function in the foregoing method. The memory is configured to be coupled to the processor, and stores a program (instructions) and/or data necessary for the apparatus. Optionally, the apparatus may further include an interface configured to support interaction between the apparatus and another apparatus. Optionally, the memory may be located inside the apparatus, or may be located outside the apparatus. Optionally, the memory may be integrated with the processor.

According to a third aspect, an electronic device is provided, including an input apparatus, an output apparatus, a memory, and a processor. The processor is coupled to the input apparatus, the output apparatus, and the memory, and the processor is configured to execute a computer program or instructions, to control the input apparatus to receive information and control the output apparatus to send information. When the processor executes the computer program or the instructions, the processor is further configured to implement the foregoing method through a logic circuit or by executing code instructions. The input apparatus and the output apparatus may be input and output interfaces, and are configured to receive a signal from an apparatus other than the apparatus and transmit the signal to the processor, or send a signal from the processor to an apparatus other than the apparatus.

The processor is configured to execute the following steps:
obtaining at least one child thread task obtained by dividing a main thread task, and sequentially distributing the at least one child thread task to a task queue, where the at least one child thread task includes the following information: a bytecode address corresponding to an execution method of the at least one child thread task, or source code corresponding to the execution method of the at least one child thread task; sequentially obtaining the at least one child thread task from the task queue and respectively distributing the at least one child thread task to at least one child thread in a child thread pool, based on a hardware resource status of the electronic device and/or status information of the at least one child thread, so that the at least one child thread respectively executes the at least one child thread task, to obtain an execution result of the at least one child thread task; and obtaining the execution result that is of the at least one child thread task and that is returned by the at least one child thread, and returning the execution result of the at least one child thread task to a main thread.

In a possible implementation, that the processor performs the step of sequentially distributing the at least one child thread task to the task queue includes: sequentially distributing the at least one child thread task to the task queue based on a feature of the at least one child thread task.

In another possible implementation, the feature of the at least one child thread task includes a priority of the at least one child thread task, and that the processor performs the step of sequentially distributing the at least one child thread task to the task queue based on the feature of the at least one child thread task includes: sequentially distributing, based on the priority of the at least one child thread task, the at least one child thread task to a task queue corresponding to the priority, where the task queue corresponding to the priority includes at least one of the following task queues: a high-priority queue, a medium-priority queue, and a low-priority queue.

In still another possible implementation, the status information of the at least one child thread includes at least one of the following information: a load size of the at least one child thread and a quantity of child threads in the child thread pool. That the processor performs the step of sequentially obtaining the at least one child thread task from the task queue and respectively distributing the at least one child thread task to the at least one child thread in the child thread pool based on the hardware resource status of the electronic device and/or the status information of the at least one child thread includes: when the hardware resource status of the electronic device supports the at least one child thread in the thread pool, sequentially obtaining the at least one child thread task from the task queue, and respectively distributing the at least one child thread task to at least a part of the at least one child thread; and/or when the hardware resource status of the electronic device supports a part of child threads in the thread pool, sequentially obtaining the at least one child thread task from the task queue, and respectively distributing the at least one child thread task to the part of child threads in the thread pool; and/or sequentially obtaining the at least one child thread task from the task queue, and respectively distributing the at least one child thread task to the at least one child thread whose load is less than or equal to a first threshold; and/or if a quantity of child threads whose load is less than or equal to the first threshold is less than a quantity of the at least one child thread task, creating at least one child thread, and respectively distributing the at least one child thread task to the at least one existing child thread in the thread pool and the at least one created child thread.

In still another possible implementation, after the processor performs the step of obtaining the execution result that is of the at least one child thread task and that is returned by the at least one child thread, the processor further performs the following step: if a quantity of child thread tasks in the task queue is less than or equal to a second threshold, and the quantity of child threads whose load is less than or equal to the first threshold is greater than or equal to a third threshold, reclaiming at least one child thread, where a quantity of the at least one reclaimed child thread is less than or equal to a difference between the third threshold and the second threshold.

In still another possible implementation, the at least one child thread task further includes at least one of the following information: a parameter of the at least one child thread task and a constant value of the execution method. Before the processor performs the step of sequentially distributing the at least one child thread task to the task queue, the processor further performs the following step: serializing the at least one child thread task, so that the at least one child thread deserializes the at least one serialized child thread task, and obtains the execution method of the at least one child thread task from a bytecode sharing interval based on the bytecode address corresponding to the execution method, or obtains the source code corresponding to the execution method of the at least one child thread task.

According to a fourth aspect, a method for task concurrency in an interpreted scripting language is provided, where the method is applied to an electronic device, and the method includes: A main thread divides a main thread task to obtain at least one child thread task, and sends the at least one child thread task to a task pool. The task pool obtains the at least one child thread task obtained by dividing a main thread task, and sequentially distributes the at least one child thread task to a task queue, where the at least one child thread task includes the following information: a bytecode address corresponding to an execution method of the at least one child thread task, or source code corresponding to the execution method of the at least one child thread task; and sequentially obtains the at least one child thread task from the task queue and respectively distributes the at least one child thread task to at least one child thread in a child thread pool, based on a hardware resource status of the electronic device and/or status information of the at least one child thread. The at least one child thread respectively executes the at least one child thread task, to obtain an execution result of the at least one child thread task, and returns the execution result of the at least one child thread task to the task pool. In addition, the task pool obtains the execution result that is of the at least one child thread task and that is returned by the at least one child thread, and returns the execution result of the at least one child thread task to the main thread.

According to a fifth aspect, a computer-readable storage medium is provided. The computer-readable storage medium stores a computer program or instructions. When a computer executes the computer program or the instructions, the method according to any one of the first aspect or the implementations of the first aspect is implemented.

According to a sixth aspect, a computer program product including instructions is provided. When the instructions are run on an apparatus, the apparatus is enabled to perform the method according to any one of the first aspect or the implementations of the first aspect.

### BRIEF DESCRIPTION OF DRAWINGS

FIG. 1 is a diagram of multi-thread concurrency;
FIG. 2 is a diagram of an existing distributed parallel computing model;
FIG. 3 is a diagram of an existing manner of implementing JS multi-threading by using Web-Worker;
FIG. 4 is a schematic flowchart of a method for task concurrency in an interpreted scripting language according to an embodiment of this application;
FIG. 5 is a diagram of example task concurrency in an interpreted scripting language according to an embodiment of this application;
FIG. 6 is a diagram of an example of transferring a bytecode address corresponding to an execution method through serialization according to an embodiment of this application;
FIG. 7 is a diagram of an example of performing distribution based on a priority of a task according to an embodiment of this application;
FIG. 8 is a diagram of an example of performing global unified management on child threads according to an embodiment of this application;
FIG. 9 is a diagram of a structure of an apparatus for task concurrency in an interpreted scripting language according to an embodiment of this application; and
FIG. 10 is a diagram of a structure of an electronic device according to an embodiment of this application.

### DESCRIPTION OF EMBODIMENTS

The following describes embodiments of this application with reference to the accompanying drawings in embodiments of this application.

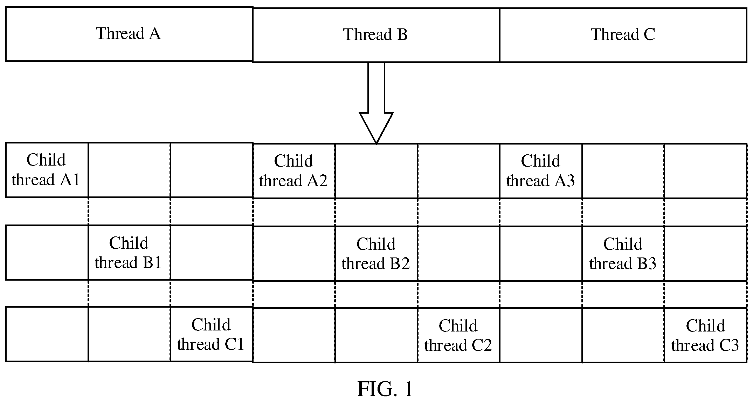

A thread in this application is a minimum unit that can be used by an operating system to perform computing scheduling. The thread is included in a process and is an actual operating unit of the process. One thread is one control flow in a single order in a process. One process may have a plurality of concurrent threads, and the threads execute different tasks in parallel. FIG. 1 is a diagram of multi-thread concurrency. A multi-thread execution mechanism is implemented in an operating system. One process includes three threads: a thread A, a thread B, and a thread C, and the three threads may be concurrently executed. Specifically, the thread A further includes a child thread A1, a child thread A2, and a child thread A3, and the child thread A1, the child thread A2, and the child thread A3 respectively indicate different tasks of the thread A. The thread B further includes a child thread B1, a child thread B2, and a child thread B3, and the child thread B1, the child thread B2, and the child thread B3 respectively indicate different tasks of the thread B. The thread C further includes a child thread C1, a child thread C2, and a child thread C3, and the child thread C1, the child thread C2, and the child thread C3 respectively indicate different tasks of the thread C. The child thread A1, the child thread B1, and the child thread C1 are concurrently executed. The child thread A2, the child thread B2, and the child thread C2 are concurrently executed. In addition, the child thread A3, the child thread B3, and the child thread C3 are concurrently executed. A plurality of threads are appropriately used, so that development and maintenance costs of a complex application can be reduced, and application performance can be further improved.

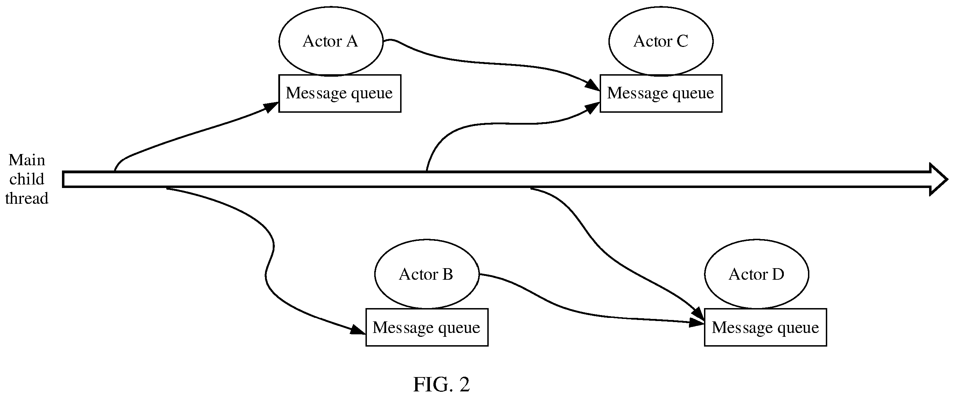

To implement thread concurrency, some concurrent computing models are designed. FIG. 2 is a diagram of an existing distributed parallel computing model. An actor transfers data based on an event/message mechanism. Herein, the essence of distributed computing is that, in a distributed environment, a plurality of processes collaborate to complete a complex task, and each process does its part to complete work of the process, and then hands a result over to another process to complete another part of the task. The actor is similar to a "black box" object that encapsulates a status and behavior of the actor, so that another actor cannot directly observe the status of the actor and call the behavior of the actor. A plurality of actors communicate with each other through a message queue (msg-queue). The message queue is similar to an email in an email box, and is an external message channel/interface. The actor performs a computing operation based on a message only after receiving the message.

An actor model indicates a distributed parallel computing model. This model has its own set of rules, which specify internal computing logic of the actor and communication rules between a plurality of actors. In the actor model, each actor is equivalent to a component in a system and is a basic computing unit. A computing manner of the actor model is similar to that of a conventional object-oriented programming (object-oriented programming, OOP) model, where an object receives a call request (similar to a message) for a method to execute the method.

However, in the OOP, data is encapsulated in one object, and cannot be accessed externally. Therefore, when a plurality of external objects perform access in a method calling manner, namely, in a synchronous manner, problems such as deadlock and contention exist, and a high concurrency requirement of a distributed system cannot be met. However, the actor model overcomes a limitation of the OOP by using asynchronous communication through messages, and is applicable to a high-concurrency distributed system. The actor model can be used to effectively avoid resource contention, deadlock, and the like between threads.

For example, three objects A, B, and C are defined, and there is a function (Function) in the object C. The object A and the object B call the function in the object C at the same time. In this case, the function in the object C becomes a shared resource, and problems such as contention and deadlock may exist.

However, for the actor model, the objects A, B, and C respectively correspond to an actor A, an actor B, and an actor C. When the actor A and the actor B need to execute function logic in the actor C, the actor A and the actor B send messages to the actor C. The messages of the actor A and the actor B are stored in a message queue of the actor C, and then the function is executed based on a sequence of the messages. In other words, in the actor model, an asynchronous mode is used, and each actor encapsulates its own data, method, and the like, to resolve problems such as deadlock and contention that exist in the OOP.

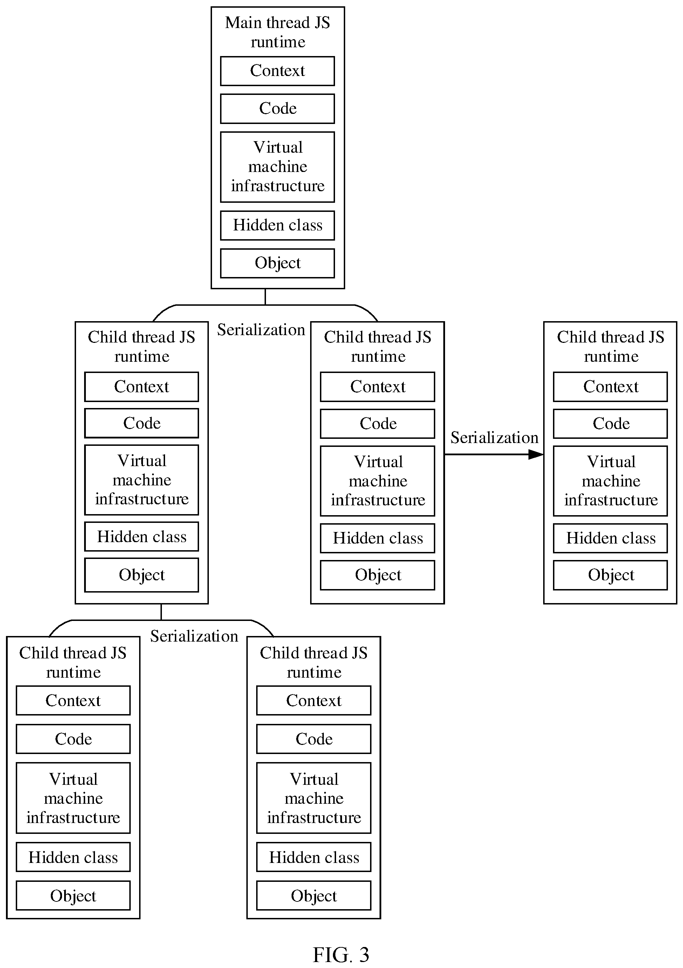

Web-Worker is a JS multi-thread solution implemented based on an actor model to create a multi-thread environment for JS. FIG. 3 is a diagram of an existing manner of implementing JS multi-threading by using the Web-Worker. In the Web-Worker, a main thread may create child threads (Workers), and allocate some tasks to the workers for running. The workers are isolated from each other. After completing computing tasks, the workers return results to the main thread by transferring objects through serialization.

JS runtime (Runtime) is used to describe an environment required for running the JS, an execution engine, and the like. Main thread JS runtime (Main JS Runtime) and child thread JS Runtime (Worker JS Runtime) include the following information: context (Context), code (code), virtual machine infrastructure (vm infra), hidden classes (hidden classes), and objects (objects).

A child thread application interface (Worker API), based on an actor concurrency model, of the JS provides a multi-thread capability, allowing an application developer to use a worker to reduce a load of the main thread through multi-threading, to improve application performance.

Code implementation of the main thread may be as follows:

```
          import worker from '@ohos.worker'
          ...
          var worker = new worker.Worker("sample.js", type: "classic", name"hello")
          var fetchCmd = {
           type: "FetchAlbumList",
           params: albumListInfo
          };
          worker.postMessage(fetchCmd);
          ...
          worker.onMessage() = function(e) {
           var data = e.data;
           if (data.type =="OK"){
             resAlbumArray = data.content;
          }
          }
```

Here, postMessage indicates that the main thread sends a message to the worker, and onMessage indicates that the main thread receives a message sent by the worker. It can be learned that, through a message, the main thread interacts with the worker and workers interact with each other.

Code implementation of the worker API may be as follows:

```
          import worker from '@ohos.worker'
          const parentPort = worker.parentPort;
          parentPort.onmessage = function(e) {
            var command = e.data;
           if (command.type ="FetchAlbumList"){
            var albumArr = JSON.parse(command.params);
            return albumArr;
            ...
          }
```

However, the Web-Worker solution cannot be used to perform global unified management on a plurality of threads. Different modules in the main thread use workers. Workers of different modules may have repeated functions and unsaturated loads. If a plurality of modules all use workers, worker flooding occurs. In addition, a worker user needs to manage a life cycle of a worker. Consequently, thread resource utilization is low.

In addition, the worker user needs to manage the life cycle of the worker, including creating, destroying, reclaiming the worker, and the like.

In addition, the worker is an executor of a message/task, and further needs to know which tasks need to be executed. In an existing multi-thread solution implemented based on a C language or the like, a main thread and a plurality of child threads may share a memory, so that a child thread can obtain, from the shared memory, a function corresponding to a method that needs to be executed by the child thread. JS is a single-thread interpreted scripting language. An existing worker does not support function transfer, and a to-be-executed function needs to be written in a worker.js file. Consequently, multi-thread concurrent execution efficiency is low.

An embodiment of this application provides a solution for task concurrency in an interpreted scripting language. The solution includes: obtaining a child thread task obtained by dividing a main thread task, and distributing the child thread task to a task queue, where the child thread task includes a bytecode address corresponding to an execution method of the child thread task or source code corresponding to the execution method of the child thread task; obtaining the child thread task from the task queue and distributing the child thread task to a child thread in a child thread pool, based on a hardware resource status of an electronic device and/or status information of the child thread, so that the child thread executes the child thread task, to obtain an execution result of the child thread task; and obtaining the execution result that is of the child thread task and that is returned by the child thread, and returning the execution result of the child thread task to a main thread. According to the solutions of this application, task concurrency in JS can be implemented, and thread resource utilization can be improved.

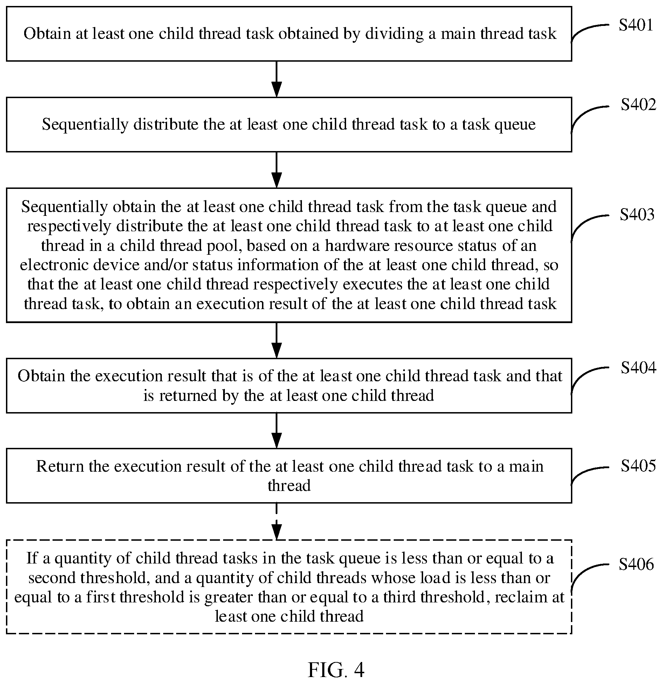

FIG. 4 is a schematic flowchart of a method for task concurrency in an interpreted scripting language according to an embodiment of this application. The method is applied to an electronic device. This embodiment is described by using an example in which the interpreted scripting language is a JS language. For example, the method may be performed through a task pool (TaskPool) API in the electronic device. For example, the method may include the following steps.

S401: Obtain at least one child thread task obtained by dividing a main thread task.

When one thread (referred to as a main thread herein) schedules some tasks (for example, time-consuming tasks) based on the JS language, these tasks are time-consuming, and at least one child thread needs to be concurrently executed to share the time-consuming tasks, to improve execution efficiency of the time-consuming tasks. Therefore, which child threads are used to execute the tasks relates to division of the main thread task and unified deployment of the child threads.

Currently, no JS-based concurrency solution similar to a Taskpool interface is provided. Therefore, this embodiment provides a JS language-based concurrency solution similar to the Taskpool interface (namely, the task pool API).

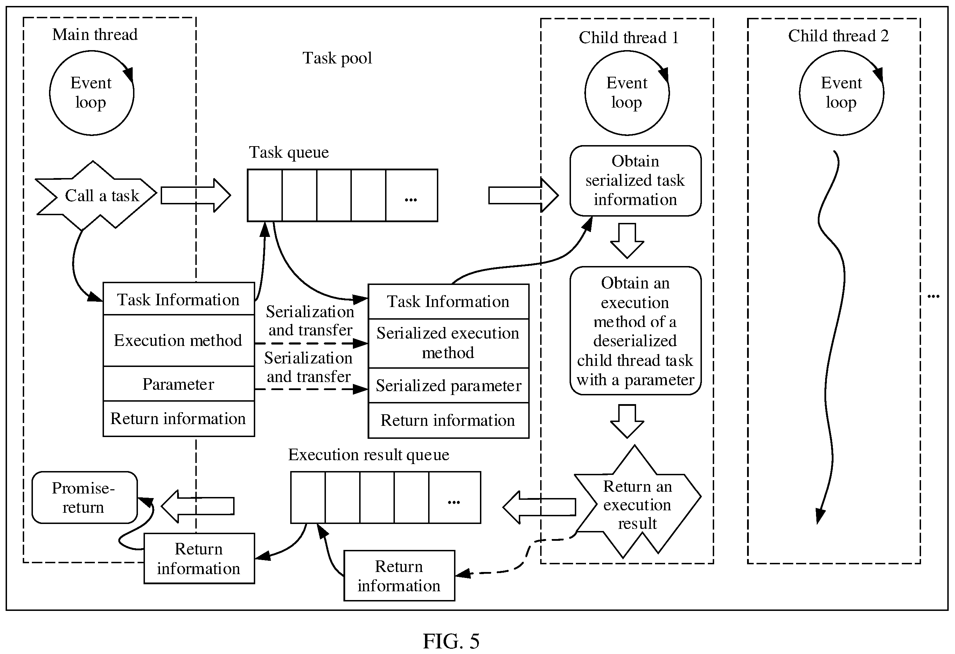

FIG. 5 is a diagram of example task concurrency in an interpreted scripting language according to an embodiment of this application. The main thread calls one task (Call Task) in an event loop (Event Loop). The task is, for example, a time-consuming task, and at least one child thread needs to be concurrently executed to share the time-consuming task, to improve execution efficiency of the task. Therefore, the main thread divides the task to obtain at least one child thread task. For example, the main thread may divide the task into the at least one child thread task based on time consumption of the task. For example, if the task takes a large quantity of time, a large quantity of child thread tasks are obtained through division. If the task takes a small quantity of time, a small quantity of child thread tasks are obtained through division. For division of the task by the main thread, refer to an implementation in a conventional technology.

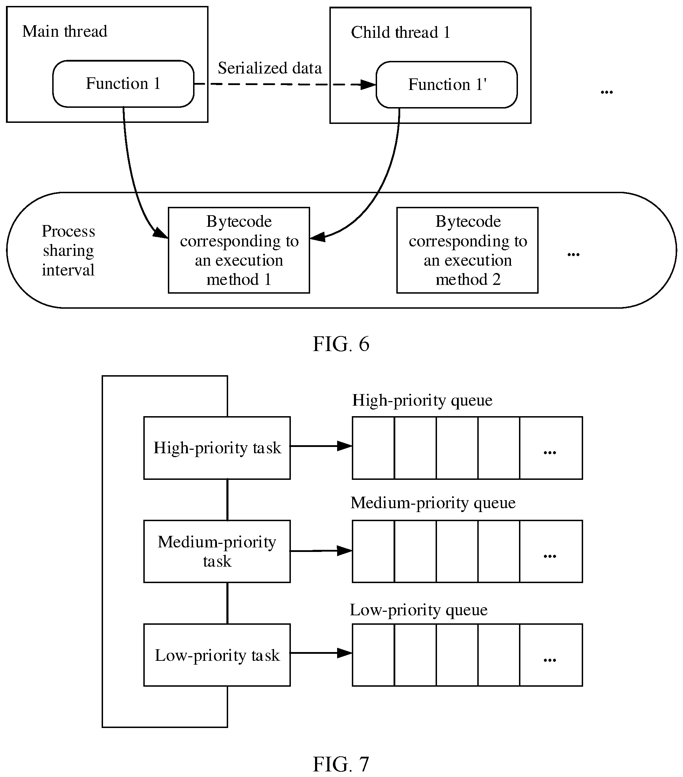

Each of the at least one child thread task obtained by dividing the main thread task has a corresponding execution method. Therefore, when obtaining the at least one child thread task through division, the main thread generates the following task information (Task Info): a bytecode address corresponding to an execution method (Task Method) of the at least one child thread task, or source code corresponding to the execution method of the at least one child thread task. FIG. 6 is a diagram of an example of transferring a bytecode address corresponding to an execution method through serialization according to an embodiment of this application. An execution method of a child thread task may be compiled in advance, to obtain bytecode corresponding to the execution method of the child thread task. In addition, the bytecode corresponding to the execution method of the child thread task is stored in a process sharing interval, and a bytecode address corresponding to the execution method is obtained. Then, the bytecode corresponding to the execution method of the child thread task may be obtained in the process sharing interval based on the bytecode address corresponding to the execution method. In addition, source code corresponding to the execution method may also be generated.

Further, the at least one child thread task may further include at least one of the following information: a parameter (Parameter) of the at least one child thread task and a constant value of the execution method. The constant value of the execution method is a parameter other than the bytecode corresponding to the execution method or the source code corresponding to the execution method in parameters corresponding to the execution method.

The task information may be used to describe a child thread task.

The task pool API obtains, from the main thread, the at least one child thread task obtained by dividing the main thread task, and specifically obtains the task information of the at least one child thread task.

In addition, when obtaining the at least one child thread task through division, the main thread further generates return information (ThenInfo). The return information is currently empty, and is used to store an execution result returned by each child thread.

S402: Sequentially distribute the at least one child thread task to a task queue.

After the task pool API obtains at least one child thread task obtained by dividing each of one or more main thread tasks, the task pool API sequentially distributes, to a task queue by using the task queue, the at least one child thread task obtained by dividing each of the one or more main thread tasks, to ensure fairness of task execution and ensure that an urgent and important child thread task is preferentially executed.

For example, urgency and importance of the child thread task may be indicated through a feature of the child thread task. For ensuring that the urgent and important child thread task is preferentially executed, the at least one child thread task may be sequentially distributed to the task queue based on the feature of the at least one child thread task. For example, if the feature of the child thread task indicates that the child thread task is more urgent or more important, the child thread task is first distributed to the task queue. If the feature of the child thread task indicates that the child thread task is average in urgency or importance, the child thread task is later distributed to the task queue.

For example, if the feature of the at least one child thread task includes a priority of the at least one child thread task, the at least one child thread task may be sequentially distributed, based on the priority of the at least one child thread task, to a task queue corresponding to the priority, where the task queue corresponding to the priority includes at least one of the following task queues: a high-priority queue, a medium-priority queue, and a low-priority queue. FIG. 7 is a diagram of an example of performing distribution based on a priority of a task according to an embodiment of this application. The task pool API may include three types of priority queues: a high-priority queue, a medium-priority queue, and a low-priority queue. The task information may further include the priority of the child thread task. The task pool API distributes, based on the priority of the child thread task, the child thread task to a task queue corresponding to the priority. For example, a high-priority child thread task is distributed to the high-priority task queue, a medium-priority child thread task is distributed to the medium-priority task queue, and a low-priority child thread task is distributed to the low-priority task queue.

For another example, the task pool API may alternatively include only one task queue. A high-priority child thread task may be preferentially added to the task queue, and then a medium-priority child thread task and a low-priority child thread task are sequentially added to the task queue.

In addition, in this embodiment, the task pool API transfers the child thread task (for example, the task information of the child thread task) to the child thread through serialization. The serialization indicates converting task information into a form that can be transmitted. Therefore, before step S402, the task pool API may further serialize the at least one child thread task. For example, the task pool API may further serialize the bytecode address corresponding to the execution method of the at least one child thread task, the parameter of the at least one child thread task, the constant value of the execution method, and the like.

Correspondingly, after the child thread obtains the serialized child thread task from the task queue, the child thread deserializes the serialized child thread task. The deserialization indicates converting serialized information into original information. For example, still refer to FIG. 6. The task pool API serializes a bytecode address corresponding to an execution method (for example, a function 1) of a task that is of a child thread 1 and that is obtained through division by the main thread, to obtain serialized data, and transfers the serialized data to the child thread 1. After obtaining the serialized data, the child thread deserializes the bytecode address corresponding to the execution method of the serialized child thread task, to obtain the bytecode address corresponding to the execution method of the child thread task, and obtains the execution method of the child thread task in a bytecode sharing interval based on the bytecode address corresponding to the execution method.

It should be noted that, in an existing solution that is not based on the JS language and that is used to globally manage a task, serialized child thread task information is not transferred. For example, in a C language-based global task management solution, sharing of an execution method is implemented through a shared memory. However, in a Web-Worker solution described in the background, a worker does not support function transfer, and a to-be-executed function needs to be written in a worker.js file. In this embodiment, serialized child thread task information is transferred, so that an execution method does not need to be written into the child thread. The child thread only needs to deserialize, after obtaining the serialized data, the bytecode address corresponding to the execution method of the serialized child thread task, to obtain the bytecode address corresponding to the execution method of the child thread task, and obtain the execution method of the child thread task in a bytecode sharing interval based on the bytecode address corresponding to the execution method. This saves storage space and improves execution efficiency.

S403: Sequentially obtain the at least one child thread task from the task queue and respectively distribute the at least one child thread task to at least one child thread in a child thread pool, based on a hardware resource status of the electronic device and/or status information of the at least one child thread, so that the at least one child thread respectively executes the at least one child thread task, to obtain an execution result of the at least one child thread task.

The task pool in this embodiment includes one or more child threads, and the task pool API performs global unified management on the one or more child threads, including child thread creation, child thread task distribution, child thread reclaiming, and the like.

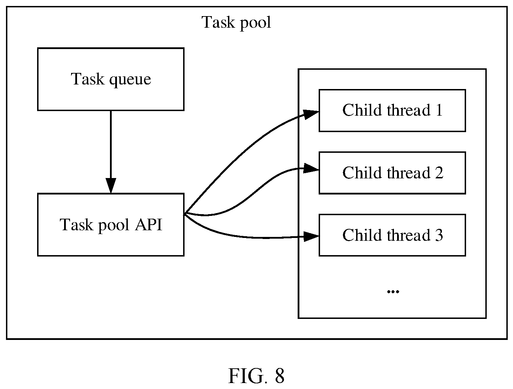

FIG. 8 is a diagram of an example of performing global unified management on child threads according to an embodiment of this application. The task pool includes a plurality of child threads: a child thread 1, a child thread 2, a child thread 3, and the like. The task pool API sequentially obtains the at least one child thread task from the task queue, and respectively distributes the at least one child thread task to the at least one child thread.

The child thread included in the thread pool is run on a hardware resource of the electronic device, and a quantity of child threads included in the thread pool cannot exceed a maximum quantity of child threads that can be supported by the hardware resource of the electronic device. Therefore, in an implementation, when the hardware resource status of the electronic device can support the at least one child thread in the thread pool, that is, all the at least one child thread can be used to process a child thread task, the at least one child thread task is sequentially obtained from the task queue, and is respectively distributed to at least a part of the at least one child thread. For example, if the maximum quantity of child threads that can be supported by the hardware resource of the electronic device is 100, the task pool includes 95 child threads, and it is assumed that current child thread tasks need to be distributed to 80 child threads, the task pool API may sequentially obtain the 80 child thread tasks from the task queue, and respectively distribute the 80 child thread tasks to 80 child threads.

In another implementation, when the hardware resource status of the electronic device supports a part of child threads in the thread pool, the at least one child thread task is sequentially obtained from the task queue, and is respectively distributed to the part of child threads in the thread pool. For example, if the maximum quantity of child threads that can be supported by the hardware resource of the electronic device is 100, and it is assumed that current child thread tasks need to be distributed to 120 child threads, the task pool API can only sequentially obtain a maximum of 100 child thread tasks from the task queue and distribute the child thread tasks to the 100 child threads. The other 20 child thread tasks need to be distributed after the 100 child threads complete the corresponding child thread tasks.

Capabilities of child threads in the task pool are generally consistent, and the child threads may simultaneously execute one or more child thread tasks. To balance a load of each child thread, the task pool API should distribute a child thread task to a child thread with a light load. Therefore, in another implementation, the at least one child thread task is sequentially obtained from the task queue, and is respectively distributed to the at least one child thread whose load is less than or equal to a first threshold. The first threshold may be set based on experience. When distributing the child thread task, the task pool API preferentially learns of the child thread with the light load and distributes the child thread task obtained from the task queue to the child thread with the light load.

However, when a quantity of child threads whose load is less than or equal to the first threshold in the task pool is insufficient, the task pool API may further create some child threads. Therefore, in another implementation, if the quantity of child threads whose load is less than or equal to the first threshold is less than a quantity of the at least one child thread task, at least one child thread is created, and the at least one child thread task is respectively distributed to the at least one existing child thread in the thread pool and the at least one created child thread. For example, the current task pool includes 100 child threads, and there are 80 child threads whose load is less than or equal to the first threshold. However, 95 child thread tasks in the current task queue are to be distributed. Therefore, the task pool API may create 15 child threads and sequentially distribute the 95 child threads in the task queue to the existing 80 child threads with a light load and the newly created 15 child threads.

For example, the foregoing implementations may be implemented independently, or may be implemented in combination.

S404: Obtain the execution result that is of the at least one child thread task and that is returned by the at least one child thread.

After obtaining child thread tasks distributed by the task pool API, child threads (for example, the child thread 1 and the child thread 2 shown in FIG. 5) executes the child thread task, to obtain execution results. The child thread returns the execution result to the task pool API.

The child thread 1 shown in FIG. 5 is used as an example. After obtaining serialized task information from the task queue in the task pool, the child thread 1 deserializes the serialized data to obtain original task information. If the serialized task information includes a bytecode address corresponding to an execution method of a child thread task, the child thread 1 deserializes the serialized bytecode address corresponding to the execution method of the child thread task, to obtain the bytecode address corresponding to the execution method of the child thread task, and obtains the execution method of the child thread task in a bytecode sharing interval based on the bytecode address corresponding to the execution method.

The child thread 1 executes the execution method based on a constant value of the execution method and the execution method (a parameter in the task information is included in the execution method) that are obtained through deserialization, to obtain an execution result.

S405: Return the execution result of the at least one child thread task to the main thread.

After obtaining an execution result returned by each child thread, the task pool API returns the execution result of each child thread to the main thread.

For example, still refer to FIG. 5. After each child thread returns the execution result, the execution result is added to an execution result queue. The task pool API obtains the execution result of each child thread from the execution result queue and sequentially returns the execution result to the main thread.

For example, the task pool API may alternatively return an execution result of one child thread to the main thread after receiving the execution result. Alternatively, the task pool API may return execution results of a plurality of child threads to the main thread after receiving the execution results.

As described above, when calling the task, the main thread generates return information, and the return information is empty. After obtaining the execution result returned by each child thread, the main thread stores the execution result of each child thread in the return information, and fills the return information as promise-return (Promise-Then). Further, the main thread uses (that is, "promises to use") the execution result returned by each child thread in the promise-return immediately or within a period of time.

Further, the following step (represented by a dashed line in the figure) may be included.

S406: If a quantity of child thread tasks in the task queue is less than or equal to a second threshold, and the quantity of child threads whose load is less than or equal to the first threshold is greater than or equal to a third threshold, reclaim at least one child thread, where a quantity of the at least one reclaimed child thread is less than or equal to a difference between the third threshold and the second threshold.

More child threads in the task pool indicate more resources being occupied. Therefore, if there are a small quantity of to-be-distributed child thread tasks in the task queue, and there are a large quantity of child threads with a light load in the task pool, a part of child threads may be reclaimed, and resources occupied by the part of child threads are released, to improve system resource utilization. For example, when the child thread is reclaimed, there should be sufficient child threads with a light load that can be used to undertake the to-be-distributed child thread task in the task queue. For example, if there are 20 to-be-distributed child thread tasks in the current task queue, and there are 50 child threads with a light load in the task pool, less than or equal to 30 child threads may be reclaimed.

For example, code implementation of the task pool API is as follows:

```
          //Import a taskpool module
          import taskpool from"@ohos.taskpool"
          @concurrent
          function parseAlbums(albumListInfo){
            var parse = JSON.parse(responseBody);
           return albumArr;
          }
          function fetchAlbums(){
            ...
           //obtain an album object array, where albumListInfo indicates a JSON character
 string of album information
           var albumArray = await taskpool.execute(parseAlbums, albumListInfo);
            ...
          }
```

Here, import taskpool from"@ohos.taskpool" indicates that the task pool API is called; return albumArr indicates returning an execution result of a child thread; and function fetchAlbums() indicates obtaining, based on a bytecode address corresponding to an execution method of the child thread, bytecode corresponding to the execution method.

In this embodiment, a simple task pool API in the JS language is provided, so that an advanced concurrency capability can be implemented in the JS language. In addition, the API is simple and easy to use. This can reduce a development code amount. In addition, a developer does not need to care about a life cycle of a thread. Through global load management, a quantity of threads can be reduced, memory occupation can be reduced, and scheduling costs can be reduced. The developer does not need to care about load balancing.

According to the method for task concurrency in an interpreted scripting language provided in embodiments of this application, the child thread task obtained by dividing the main thread task is obtained, and the child thread task is distributed to the task queue. Then, the child thread task is obtained and is distributed to the child thread in the child thread pool based on the hardware resource status of the electronic device and/or the status information of the child thread, so that the child thread executes the child thread task, to obtain the execution result of the child thread task. In addition, the execution result that is of the child thread task and that is returned by the child thread is obtained, and the execution result of the child thread task is returned to the main thread. Task concurrency in the interpreted scripting language can be implemented, and thread resource utilization can be improved.

It may be understood that, to implement functions in the foregoing embodiments, an apparatus for task concurrency in an interpreted scripting language includes corresponding software modules for performing the functions, and the electronic device includes corresponding hardware structures for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

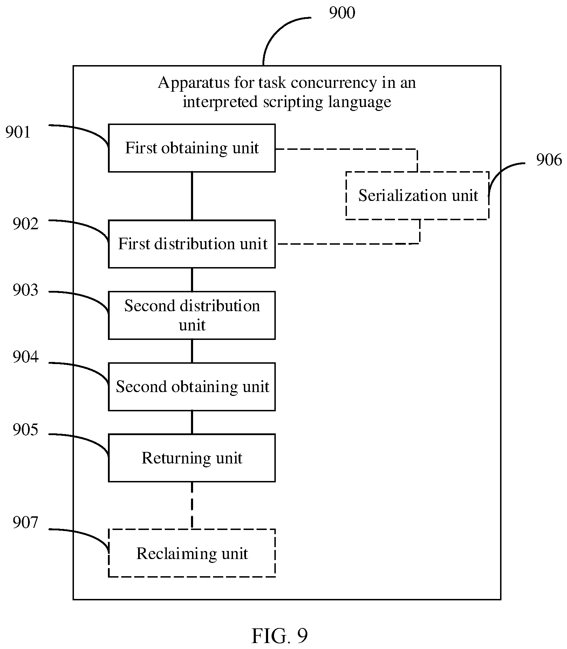

FIG. 9 is a diagram of a structure of an apparatus for task concurrency in an interpreted scripting language according to an embodiment of this application. The apparatus 900 includes: a first obtaining unit 901, a first distribution unit 902, a second distribution unit 903, a second obtaining unit 904, and a returning unit 905; and may further include a serialization unit 906 and a reclaiming unit 907 (represented by dashed lines in the figure).

The first obtaining unit 901 is configured to obtain at least one child thread task obtained by dividing a main thread task, where the at least one child thread task includes the following information: a bytecode address corresponding to an execution apparatus of the at least one child thread task, or source code corresponding to the execution apparatus of the at least one child thread task.

The first distribution unit 902 is configured to sequentially distribute the at least one child thread task to a task queue.

The second distribution unit 903 is configured to sequentially obtain the at least one child thread task from the task queue and respectively distribute the at least one child thread task to at least one child thread in a child thread pool, based on a hardware resource status of the apparatus and/or status information of the at least one child thread, so that the at least one child thread respectively executes the at least one child thread task, to obtain an execution result of the at least one child thread task.

The second obtaining unit 904 is configured to obtain the execution result that is of the at least one child thread task and that is returned by the at least one child thread.

The returning unit 905 is configured to return the execution result of the at least one child thread task to a main thread.

Optionally, the first distribution unit 902 is configured to sequentially distribute the at least one child thread task to the task queue based on a feature of the at least one child thread task.

Optionally, the feature of the at least one child thread task includes a priority of the at least one child thread task, and the first distribution unit 902 is configured to sequentially distribute, based on the priority of the at least one child thread task, the at least one child thread task to a task queue corresponding to the priority, where the task queue corresponding to the priority includes at least one of the following task queues: a high-priority queue, a medium-priority queue, and a low-priority queue.

Optionally, the status information of the at least one child thread includes at least one of the following information: a load size of the at least one child thread and a quantity of child threads in the child thread pool. The second distribution unit 903 is configured to: when the hardware resource status of the apparatus supports the at least one child thread in the thread pool, sequentially obtain the at least one child thread task from the task queue, and respectively distribute the at least one child thread task to at least a part of the at least one child thread; and/or the second distribution unit 903 is configured to: when the hardware resource status of the apparatus supports a part of child threads in the thread pool, sequentially obtain the at least one child thread task from the task queue, and respectively distribute the at least one child thread task to the part of child threads in the thread pool; and/or the second distribution unit 903 is configured to: sequentially obtain the at least one child thread task from the task queue, and respectively distribute the at least one child thread task to the at least one child thread whose load is less than or equal to a first threshold; and/or the second distribution unit 903 includes (not shown in the figure) a creation unit, configured to: if a quantity of child threads whose load is less than or equal to the first threshold is less than a quantity of the at least one child thread task, create at least one child thread; and a third distribution unit, configured to respectively distribute the at least one child thread task to the at least one existing child thread in the thread pool and the at least one created child thread.

Optionally, the reclaiming unit 907 is configured to: if a quantity of child thread tasks in the task queue is less than or equal to a second threshold, and the quantity of child threads whose load is less than or equal to the first threshold is greater than or equal to a third threshold, reclaim at least one child thread, where a quantity of the at least one reclaimed child thread is less than or equal to a difference between the third threshold and the second threshold.

Optionally, the at least one child thread task further includes at least one of the following information: a parameter of the at least one child thread task and a constant value of the execution apparatus. The serialization unit 906 is configured to: serialize the at least one child thread task, so that the at least one child thread deserializes the at least one serialized child thread task, and obtains the execution apparatus of the at least one child thread task from a bytecode sharing interval based on the bytecode address corresponding to the execution apparatus, or obtains the source code corresponding to the execution apparatus of the at least one child thread task.

For more detailed descriptions of the foregoing units, refer to related descriptions in the method embodiments shown in FIG. 4. Details are not described herein again. The apparatus may be configured to implement functions of the task pool API in the foregoing method embodiments, and therefore can also implement beneficial effect of the foregoing method embodiments.

According to the apparatus for task concurrency in an interpreted scripting language provided in embodiments of this application, the child thread task obtained by dividing the main thread task is obtained, and the child thread task is distributed to the task queue. Then, the child thread task is obtained and is distributed to the child thread in the child thread pool based on the hardware resource status of the electronic device and/or the status information of the child thread, so that the child thread executes the child thread task, to obtain the execution result of the child thread task. In addition, the execution result that is of the child thread task and that is returned by the child thread is obtained, and the execution result of the child thread task is returned to the main thread. Task concurrency in the interpreted scripting language can be implemented, and thread resource utilization can be improved.

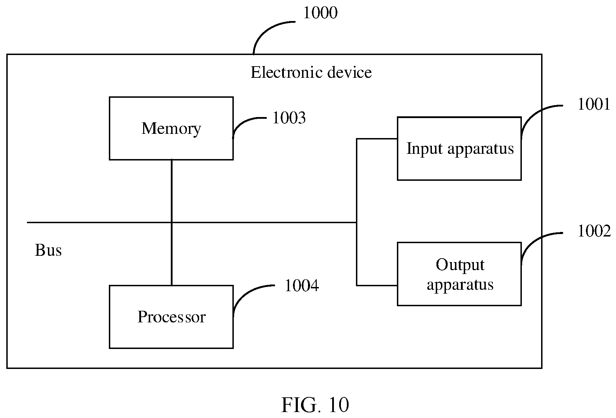

FIG. 10 is a diagram of a structure of an electronic device according to an embodiment of this application. The electronic device 1000 may include:
an input apparatus 1001, an output apparatus 1002, a memory 1003, and a processor 1004 (there may be one or more processors 1004 in the electronic device, and one processor is used as an example in FIG. 10). In some embodiments of this application, the input apparatus 1001, the output apparatus 1002, the memory 1003, and the processor 1004 may be connected through a bus or in another manner. Connection through the bus is used as an example in FIG. 10.

The processor 1004 is configured to perform the following steps:
obtaining at least one child thread task obtained by dividing a main thread task, and sequentially distributing the at least one child thread task to a task queue, where the at least one child thread task includes the following information: a bytecode address corresponding to an execution method of the at least one child thread task, or source code corresponding to the execution method of the at least one child thread task; sequentially obtaining the at least one child thread task from the task queue and respectively distributing the at least one child thread task to at least one child thread in a child thread pool, based on a hardware resource status of the electronic device and/or status information of the at least one child thread, so that the at least one child thread respectively executes the at least one child thread task, to obtain an execution result of the at least one child thread task; and obtaining the execution result that is of the at least one child thread task and that is returned by the at least one child thread, and returning the execution result of the at least one child thread task to a main thread.

In a possible implementation, that the processor 1004 performs the step of sequentially distributing the at least one child thread task to the task queue includes: sequentially distributing the at least one child thread task to the task queue based on a feature of the at least one child thread task.

In another possible implementation, the feature of the at least one child thread task includes a priority of the at least one child thread task, and that the processor 1004 performs the step of sequentially distributing the at least one child thread task to the task queue based on the feature of the at least one child thread task includes: sequentially distributing, based on the priority of the at least one child thread task, the at least one child thread task to a task queue corresponding to the priority, where the task queue corresponding to the priority includes at least one of the following task queues: a high-priority queue, a medium-priority queue, and a low-priority queue.

In still another possible implementation, the status information of the at least one child thread includes at least one of the following information: a load size of the at least one child thread and a quantity of child threads in the child thread pool. That the processor 1004 performs the step of sequentially obtaining the at least one child thread task from the task queue and respectively distributing the at least one child thread task to the at least one child thread in the child thread pool, based on the hardware resource status of the electronic device and/or the status information of the at least one child thread includes: when the hardware resource status of the electronic device supports the at least one child thread in the thread pool, sequentially obtaining the at least one child thread task from the task queue, and respectively distributing the at least one child thread task to at least a part of the at least one child thread; and/or when the hardware resource status of the electronic device supports a part of child threads in the thread pool, sequentially obtaining the at least one child thread task from the task queue, and respectively distributing the at least one child thread task to the part of child threads in the thread pool; and/or sequentially obtaining the at least one child thread task from the task queue, and respectively distributing the at least one child thread task to the at least one child thread whose load is less than or equal to a first threshold; and/or if a quantity of child threads whose load is less than or equal to the first threshold is less than a quantity of the at least one child thread task, creating at least one child thread, and respectively distributing the at least one child thread task to the at least one existing child thread in the thread pool and the at least one created child thread.

In still another possible implementation, after the processor 1004 performs the step of obtaining the execution result that is of the at least one child thread task and that is returned by the at least one child thread, the processor 1004 further performs the following step: if a quantity of child thread tasks in the task queue is less than or equal to a second threshold, and the quantity of child threads whose load is less than or equal to the first threshold is greater than or equal to a third threshold, reclaiming at least one child thread, where a quantity of the at least one reclaimed child thread is less than or equal to a difference between the third threshold and the second threshold.

In still another possible implementation, the at least one child thread task further includes at least one of the following information: a parameter of the at least one child thread task and a constant value of the execution method. Before the processor 1004 performs the step of sequentially distributing the at least one child thread task to the task queue, the processor 1004 further performs the following step: serializing the at least one child thread task, so that the at least one child thread deserializes the at least one serialized child thread task, and obtains the execution method of the at least one child thread task from a bytecode sharing interval based on the bytecode address corresponding to the execution method, or obtains the source code corresponding to the execution method of the at least one child thread task.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

According to the electronic device provided in embodiments of this application, the child thread task obtained by dividing the main thread task is obtained, and the child thread task is distributed to the task queue. Then, the child thread task is obtained and is distributed to the child thread in the child thread pool based on the hardware resource status of the electronic device and/or the status information of the child thread, so that the child thread executes the child thread task, to obtain the execution result of the child thread task. In addition, the execution result that is of the child thread task and that is returned by the child thread is obtained, and the execution result of the child thread task is returned to the main thread. Task concurrency in the interpreted scripting language can be implemented, and thread resource utilization can be improved.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in an electronic device. Certainly, the processor and the storage medium may alternatively exist in the electronic device as discrete components.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network device, an electronic device, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The symbol "/" in the text description of this application generally represents an "or" relationship between associated objects. In a formula of this application, the symbol "/" indicates a "division" relationship between associated objects.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes.

## Claims

1. A method for task concurrency in an interpreted scripting language, wherein the method is applied to an electronic device, and the method comprises:
obtaining at least one child thread task obtained by dividing a main thread task, and sequentially distributing the at least one child thread task to a task queue, wherein the at least one child thread task comprises the following information: a bytecode address corresponding to an execution method of the at least one child thread task, or source code corresponding to the execution method of the at least one child thread task;
sequentially obtaining the at least one child thread task from the task queue and respectively distributing the at least one child thread task to at least one child thread in a child thread pool, based on a hardware resource status of the electronic device and/or status information of the at least one child thread, so that the at least one child thread respectively executes the at least one child thread task, to obtain an execution result of the at least one child thread task; and
obtaining the execution result that is of the at least one child thread task and that is returned by the at least one child thread, and returning the execution result of the at least one child thread task to a main thread.

2. The method according to claim 1, wherein sequentially distributing the at least one child thread task to the task queue comprises:
sequentially distributing the at least one child thread task to the task queue based on a feature of the at least one child thread task.

3. The method according to claim 2, wherein the feature of the at least one child thread task comprises a priority of the at least one child thread task, and sequentially distributing the at least one child thread task to the task queue based on the feature of the at least one child thread task comprises:
sequentially distributing, based on the priority of the at least one child thread task, the at least one child thread task to a task queue corresponding to the priority, wherein the task queue corresponding to the priority comprises at least one of the following task queues: a high-priority queue, a medium-priority queue, and a low-priority queue.

4. The method according to any one of claims 1 to 3, wherein the status information of the at least one child thread comprises at least one of the following information: a load size of the at least one child thread and a quantity of child threads in the child thread pool; and
sequentially obtaining the at least one child thread task from the task queue and respectively distributing the at least one child thread task to the at least one child thread in the child thread pool, based on the hardware resource status of the electronic device and/or the status information of the at least one child thread comprises:
when the hardware resource status of the electronic device supports the at least one child thread in the thread pool, sequentially obtaining the at least one child thread task from the task queue, and respectively distributing the at least one child thread task to at least a part of the at least one child thread; and/or
when the hardware resource status of the electronic device supports a part of child threads in the thread pool, sequentially obtaining the at least one child thread task from the task queue, and respectively distributing the at least one child thread task to the part of child threads in the thread pool; and/or
sequentially obtaining the at least one child thread task from the task queue, and respectively distributing the at least one child thread task to the at least one child thread whose load is less than or equal to a first threshold; and/or
if a quantity of child threads whose load is less than or equal to the first threshold is less than a quantity of the at least one child thread task, creating at least one child thread, and respectively distributing the at least one child thread task to the at least one existing child thread in the thread pool and the at least one created child thread.

5. The method according to claim 4, wherein after obtaining the execution result that is of the at least one child thread task and that is returned by the at least one child thread, the method further comprises:
if a quantity of child thread tasks in the task queue is less than or equal to a second threshold, and the quantity of child threads whose load is less than or equal to the first threshold is greater than or equal to a third threshold, reclaiming at least one child thread, wherein a quantity of the at least one reclaimed child thread is less than or equal to a difference between the third threshold and the second threshold.

6. The method according to any one of claims 1 to 5, wherein the at least one child thread task further comprises at least one of the following information: a parameter of the at least one child thread task and a constant value of the execution method; and
before sequentially distributing the at least one child thread task to the task queue, the method further comprises:
serializing the at least one child thread task, so that the at least one child thread deserializes the at least one serialized child thread task, and obtains the execution method of the at least one child thread task from a bytecode sharing interval based on the bytecode address corresponding to the execution method, or obtains the source code corresponding to the execution method of the at least one child thread task.

7. An apparatus for task concurrency in an interpreted scripting language, wherein the apparatus comprises:
a first obtaining unit, configured to obtain at least one child thread task obtained by dividing a main thread task, wherein the at least one child thread task comprises the following information: a bytecode address corresponding to an execution apparatus of the at least one child thread task, or source code corresponding to the execution apparatus of the at least one child thread task;
a first distribution unit, configured to sequentially distribute the at least one child thread task to a task queue;
a second distribution unit, configured to: sequentially obtain the at least one child thread task from the task queue and respectively distribute the at least one child thread task to at least one child thread in a child thread pool, based on a hardware resource status of the apparatus and/or status information of the at least one child thread, so that the at least one child thread respectively executes the at least one child thread task, to obtain an execution result of the at least one child thread task;
a second obtaining unit, configured to obtain the execution result that is of the at least one child thread task and that is returned by the at least one child thread; and
a returning unit, configured to return the execution result of the at least one child thread task to a main thread.

8. The apparatus according to claim 7, wherein the first distribution unit is configured to sequentially distribute the at least one child thread task to the task queue based on a feature of the at least one child thread task.

9. The apparatus according to claim 8, wherein the feature of the at least one child thread task comprises a priority of the at least one child thread task, and the first distribution unit is configured to sequentially distribute, based on the priority of the at least one child thread task, the at least one child thread task to a task queue corresponding to the priority, wherein the task queue corresponding to the priority comprises at least one of the following task queues: a high-priority queue, a medium-priority queue, and a low-priority queue.

10. The apparatus according to any one of claims 7 to 9, wherein the status information of the at least one child thread comprises at least one of the following information: a load size of the at least one child thread and a quantity of child threads in the child thread pool; and
the second distribution unit is configured to: when the hardware resource status of the apparatus supports the at least one child thread in the thread pool, sequentially obtain the at least one child thread task from the task queue, and respectively distribute the at least one child thread task to at least a part of the at least one child thread; and/or
the second distribution unit is configured to: when the hardware resource status of the apparatus supports a part of child threads in the thread pool, sequentially obtain the at least one child thread task from the task queue, and respectively distribute the at least one child thread task to the part of child threads in the thread pool; and/or
the second distribution unit is configured to: sequentially obtain the at least one child thread task from the task queue, and respectively distribute the at least one child thread task to the at least one child thread whose load is less than or equal to a first threshold; and/or
the second distribution unit comprises: a creation unit, configured to: if a quantity of child threads whose load is less than or equal to the first threshold is less than a quantity of the at least one child thread task, create at least one child thread; and a third distribution unit, configured to respectively distribute the at least one child thread task to the at least one existing child thread in the thread pool and the at least one created child thread.

11. The apparatus according to claim 10, wherein the apparatus further comprises:
a reclaiming unit, configured to: if a quantity of child thread tasks in the task queue is less than or equal to a second threshold, and the quantity of child threads whose load is less than or equal to the first threshold is greater than or equal to a third threshold, reclaim at least one child thread, wherein a quantity of the at least one reclaimed child thread is less than or equal to a difference between the third threshold and the second threshold.

12. The apparatus according to any one of claims 7 to 11, wherein the at least one child thread task further comprises at least one of the following information: a parameter of the at least one child thread task and a constant value of the execution apparatus; and
the apparatus further comprises:
a serialization unit, configured to: serialize the at least one child thread task, so that the at least one child thread deserializes the at least one serialized child thread task, and obtains the execution apparatus of the at least one child thread task from a bytecode sharing interval based on the bytecode address corresponding to the execution apparatus, or obtains the source code corresponding to the execution apparatus of the at least one child thread task.

13. An electronic device, comprising an input apparatus, an output apparatus, a memory, and a processor, wherein the processor is configured to perform the method according to any one of claims 1 to 6.

14. A chip, wherein the chip is configured to perform the method according to any one of claims 1 to 6.

15. A chip module, comprising an input/output component and a chip, wherein the chip is configured to perform the method according to any one of claims 1 to 6.

16. A computer-readable storage medium, wherein the storage medium stores a computer program or instructions, and when the computer program or the instructions are executed by an apparatus for task concurrency in an interpreted scripting language, the method according to any one of claims 1 to 6 is implemented.
